# EUROPEAN PATENT APPLICATION

(11) **EP 2 755 371 A1**
(43) Date of publication of application: **16.07.2014**
(21) Application number: 13275010.0
(22) Date of filing: 15.01.2013
(51) Int. Cl.: H04M 1/725

(54) **Voice Controlled Cell Phone**

(71) Applicant: Ramdeo, Pradeep, New York, NY 10472 (US)
(72) Inventor: Ramdeo, Pradeep, New York, NY 10472 (US)
(74) Representative: Wilson Gunn

(57) **Abstract**

A hand-free voice controlled cell phone which includes an antenna, a transceiver coupled to the antenna, a processor coupled to the transceiver, a microphone coupled to the processor and a speaker coupled to the processor. A memory unit is within the processor. A first program within the memory unit is for converting a voice message from the microphone made by a person using the cell phone into a text message for deaf person. The processor can output the text message to the transceiver and out of the antenna, to allow another person using a remote second cell phone to receive the text message. The first program for converting the voice message into a text message includes a voice-to-text software.

## Description

### BACKGROUND OF THE INVENTION

### Field of the Invention:

The present invention relates to a wireless mobile communication device, and more particularly, a voice controlled cell phone. The voice control cell phone provides deaf people with a product that makes cellular phone use easier, safer, and more convenient than is possible with conventional smart phones. The present invention features several amenities that simplify smart phone applications for people who are disabled or have difficulty using regular cell phones. Special features, such as a voice-to-text software or similar type software, will convert spoken words of a person into a text message. It also includes a voice-recognition software or similar type software, as well as traditional smart phone applications, such as a camera/flash, video/audio recorder and music player.

### Description of the Prior Art:

Conventional cell phones can be difficult to operate. Texting, for example, can be a difficult task to perform if keypads are not user-friendly. People who have disabilities or certain physical limitations may find texting to be nearly impossible. People who have the ability to text, however, tend to do so frequently. Many people even text while driving, which increases the risk of serious or fatal car accidents. Cell phone use while driving is banned in many states to prevent such accidents from occurring. This is a safe but inconvenient solution, as people may need to take important calls or texts while in transit.

Numerous innovations for telecommunications technologies have been provided in the prior art that will be described. Even though these innovations may be suitable for the specific individual purposes to which they address, however, they differ from the present invention.

A FIRST EXAMPLE, U.S. Patent Office Publication No. 2004/0202291, published on 10-14-2004, to Skinner teaches a wireless mobile phone having voice recording, and method of operating the mobile phone. In one embodiment, a method for handling a voice recording with a wireless mobile phone comprises recording and storing a voice signal as a voice recording into at least one of an internal memory and a removable memory unit of the wireless mobile phone, and then electronically transferring the voice recording from the wireless mobile phone to an external target device.

A SECOND EXAMPLE, U.S. Patent Office Document No. 7,792, 678, issued on 09-07-2010, to Hung teaches a device that includes an image capturing device having a speech recognition device and a receiving device. The speech recognition device includes a voice command unit stored a plurality of voice commands, a voice character memory unit stored a plurality of voice characteristics corresponding to the voice commands for indentifying the commands conforming to the voice characteristics received in the receiving device to form a voice command set, and an image characteristic memory unit stored a plurality of image characteristics corresponding to the voice commands of the voice command set. The image capturing device captures a real-time image to compare with the image characteristic in the image characteristic memory unit. The image capturing device selects a command from the command set and executes the selected command according to the comparing result generated by the image capturing device.

A THIRD EXAMPLE, U.S. Patent Office Publication No. 20100323657, published on 12-23-2010, to Barnard et al. teaches a method, system, and media directed to managing a mobile communications device. In one embodiment, a communication event and spatial state for the mobile device is received. If the event is at least one of a plurality of preselected types and the spatial state of the device satisfies a preselected condition, the communication event is call-processed while initiating a notification of the event to a user of the mobile device.

A FOURTH EXAMPLE, U.S. Patent Office Document No. 7,869,800, issued on 01-11-2011, to Netanel et al. teaches a portable cellular phone system, wherein matched sets of algorithmically generated communication units are generated, each defining an increment of authorized communication. One set is stored on a system server, i.e. a service provider, and the pre-paid set is available for use within a portable cellular phone. The portable cellular phone, which is normally non-activated, automatically contacts the system server upon selective activation by the user, to initiate a call (outgoing or incoming). A voice recognition system allows the user to place calls and/or receive calls. During a call, the portable cellular phone and the system server allow authorized access to communication, while the communication units are decremented at the system server and at the portable cellular phone. The portable cellular phone typically has either an internal energy supply and storage for the pre-paid communication units, or a removable airtime cartridge, typically containing an energy supply and either the ability to store or to generate a set of pre-paid single use airtime communication units.

A FIFTH EXAMPLE, U.S. Patent Office Publication No. 2011/0166860, published on 07-07-2011, to Tran teaches systems and methods to operate a mobile device by capturing user input; transmitting the user input over a wireless channel to an engine, analyzing at the engine music clip or video in a multimedia data stream and sending an analysis wirelessly to the mobile device.

It is apparent now that numerous innovations for telecommunications technologies have been provided in the prior art that are adequate for various purposes. Furthermore, even though these innovations may be suitable for the specific individual purposes to which they address, accordingly, they would not be suitable for the purposes of the present invention as heretofore described.

### SUMMARY OF THE INVENTION

AN OBJECT of the present invention is to provide a voice controlled cell phone that avoids the disadvantages of the prior art.

ANOTHER OBJECT of the present invention is to provide a voice controlled cell phone that is simple and inexpensive to manufacture.

STILL ANOTHER OBJECT of the present invention is to provide a voice controlled cell phone that is simple to use.

BRIEFLY STATED, STILL YET ANOTHER OBJECT of the present invention is to provide a voice controlled cell phone which comprises an antenna, a transceiver coupled to the antenna, a processor coupled to the transceiver, a microphone coupled to the processor and a speaker coupled to the processor. A memory unit is within the processor. A first program within the memory unit is for converting a voice message from the microphone made by a person using the cell phone into a text message. The processor can output the text message to the transceiver and out of the antenna, to allow another person using a remote second cell phone to receive the text message. The first program for converting the voice message into a text message comprises a voice-to-text software or similar type software.

The novel features which are considered characteristic of the present invention are set forth in the appended claims. The invention itself, however, both as to its construction and its method of operation, together with additional objects and advantages thereof, will be best understood from the following description of the specific embodiments when read and understood in connection with the accompanying drawing.

### BRIEF DESCRIPTION OF THE DRAWING

The figures of the drawings are briefly described as follows:
Figure **1** is a block diagram of the present invention showing various components therein;
Figure **2** is a perspective view showing a person in a motor vehicle converting a voice message into a text message using the present invention;
Figure **3** is a perspective view showing another person using a remote cell phone to read the text message;
Figure **4** is a perspective view showing a person using the present invention hands free while driving; and
Figure **5** is a perspective view showing the present invention in a wireless charging cradle.

### REFERENCE NUMERALS UTILIZED IN THE DRAWING

- **110**: voice controlled cell phone
- **112**: antenna of cell phone **110**
- **114**: transceiver of cell phone **110**
- **116**: processor of cell phone **110**
- **118**: microphone of cell phone **110**
- **120**: speaker of cell phone **110**
- **122**: memory unit in processor **116**
- **124**: first program within memory unit **122**
- **126**: person using cell phone **110**
- **128**: person using remote second cell phone **130**
- **130**: remote second cell phone
- **132**: voice-to-text software for first program **124**
- **134**: second program within memory unit **122**
- **136**: text-to-voice software for second program **134**
- **138**: third program within memory unit **122**
- **140**: voice-recognition software for third program **138**
- **142**: wireless charging cradle for cell phone **110**
- **144**: rechargeable battery in cell phone **110**
- **146**: screen in cell phone **110**
- **148**: keypad in cell phone **110**
- **150**: Global Positioning System in cell phone **110**
- **152**: control buttons in cell phone **110**
- **154**: USB port in cell phone **110**
- **156**: camera in cell phone **110**
- **158**: vibration device in cell phone **110**

### DETAILED DESCRIPTION OF THE PREFERRED EMBODIMENT

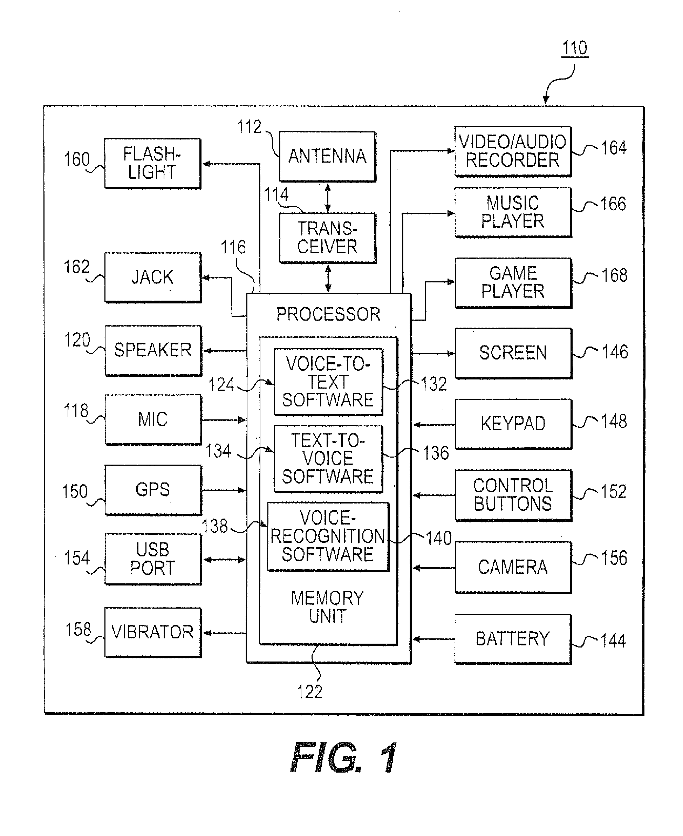

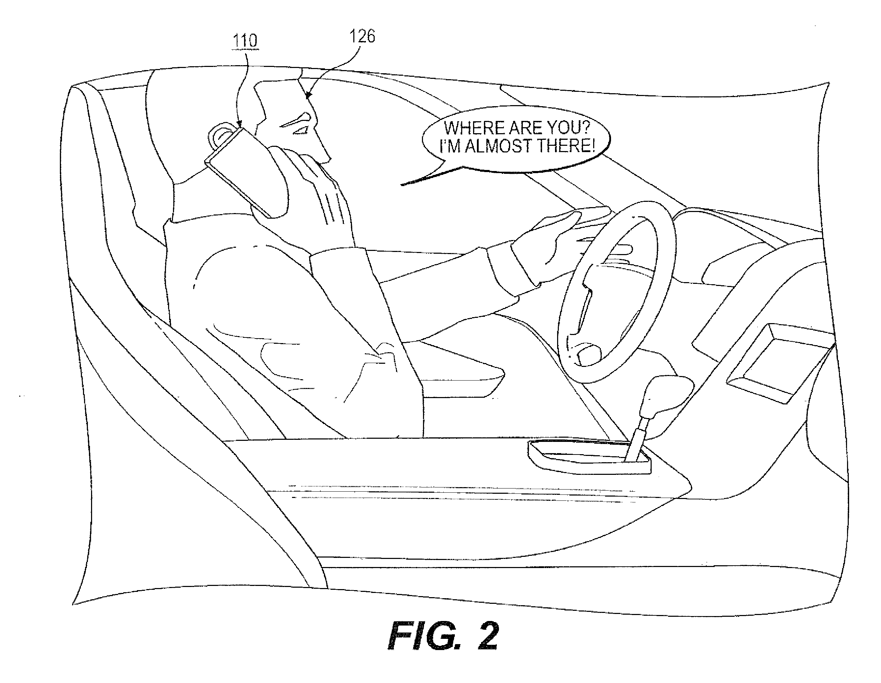

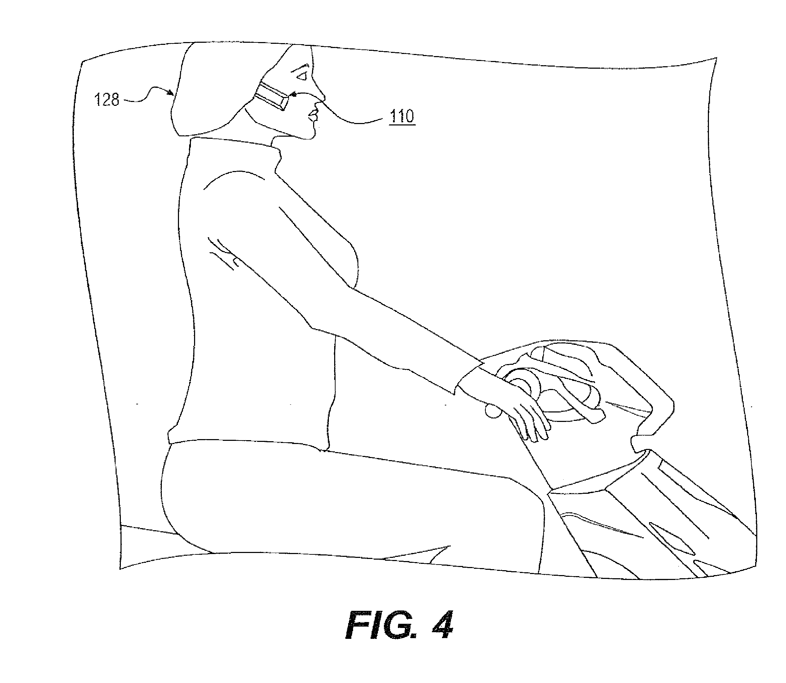

Figure **1** shows the present invention being a voice controlled cell phone **110** which comprises an antenna **112,** a transceiver **114** coupled to the antenna **112,** a processor **116** coupled to the transceiver **114,** a microphone **118** coupled to the processor **116** and a speaker **120** coupled to the processor **118.** A memory unit **122** is within the processor **116.** A first program **124** within the memory unit **122** is for converting a voice message from the microphone **118** made by a person **126** using the cell phone **110** into a text message, shown in Figures **2** and **4****.** The first program **124** for converting the voice message into a text message comprises a voice-to-text software **132.**

A second program **134** within the memory unit **122** is for converting an inbound text message received by the transceiver **114** from the antenna **112** into a voice message. The processor **116** can output the voice message into the speaker **120** to allow the person **126** using the cell phone **110** to hear the voice message. The second program **134** for converting the inbound text message into a voice message comprises a text-to-voice software **136.**

A third program **138** within the memory unit **122** is for recognizing a voice of the person **126** using the cell phone **110,** whereby the processor **116** will allow the person **126** to perform various traditional voice command tasks on the cell phone **110.** The third program **138** for recognizing the voice of the person using the cell phone **110** comprises a voice-recognition software **140.**

In review, Figure 1, shows all the different elements of phone **110.** The antenna **112** is connected to the transceiver **114** and routes inbound calls (e.g., voice signals and text) to the processor **116.** The processor **116** also sends outbound calls that were initiated by the person **126** to the transceiver **114** where the call is broadcast over the antenna **112.** The processor **116** is not limited to a single processor, but can also comprise two or more processors that are able to communicate with each other. The memory unit **122** in the processor **116** is responsible for programming, processing and handling any and all of the features and functions of the cell phone **110.** The memory unit **122** comprises the first program **124** being the voice-to-text software **132,** the second program **134** being the text-to-voice software **136** and the third program **138** being the voice recognition software **140.** The processor **116** is also connected to other components associated with the cell phone **110** and includes the speaker **120,** a screen **146,** the microphone **118,a** keypad **148,** a Global Positioning System **150,** control buttons **152,** a USB port **154,** a camera **156,** a vibration device **158,** a flashlight **160,** a headphone jack **162,** a video/audio player **164,** a music player **166** and a game player **168.**

The processor **116** may be any programmable microprocessor, microcomputer or multiple processor chip or chips that can be configured by software instructions (applications) to perform a variety of functions, including the functions of the various embodiments described herein. In some cell phones, multiple processors may be provided, such as one processor dedicated to wireless communication functions and one processor dedicated to running other applications.

The voice control cell phone **110** is a smart phone with modifications that allow people to use its various applications with ease. Various models may have different features including hardware, software and etc. Some models may be designed for people with certain specific disabilities such as for example blind or the hearing impaired [deaf]. The present invention contains the touch screen **146** and many traditional applications, such as hands-free capabilities including internet accessibility, the game player **168,** camera **156,** and other similar features. The headphone jack **162** and volume control buttons **152** may be located on one side of the cell phone **110,** while the control buttons **152** for the camera **156** and music player **166** can be included on the opposite side. The top of the cell phone **110** can include the flashlight **160** with a power button. In terms of innovative, non-traditional functions, the cell phone **110** has a voice-to-text software **132** or similar type software. This software **132** can allow the person **126** to speak while the cell phone **110** converts the spoken words into a text message. The voice-recognition software **140** or similar type software may also be utilized during this process, and can be used to perform traditional voice-command tasks. The text-to-voice software **136** can also convert incoming texts, allowing the cell phone **110** to speak the text message aloud.

As shown in Figure **2****,** a person **126** (driving a vehicle) uses the cell phone **110** (with a first program **124** within the memory unit **122**) for converting a voice message from the microphone **118** into a text message (also shown in Figure **1**).

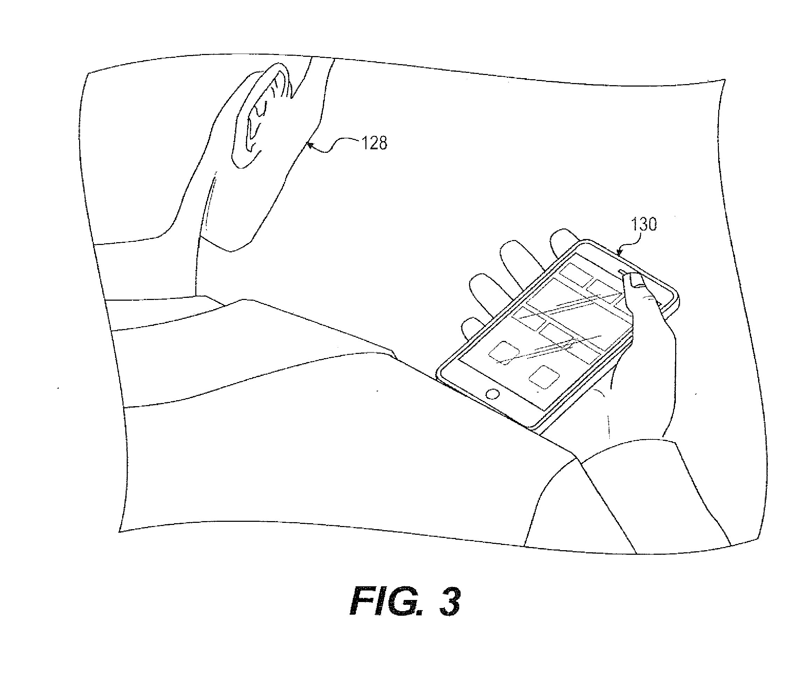

As shown in Figure **3****,** the processor **116** can output the text message to the transceiver **114** and out of the antenna **112** to allow another person **128** using a remote second cell phone **130** to receive the text message (also shown in Figure **1**).

As shown in Figure **4****,** a person **126** (riding a motorbike) uses the cell phone **110** (with a first program **124** within the memory unit **122**) for converting a voice message from the microphone **118** into a text message.

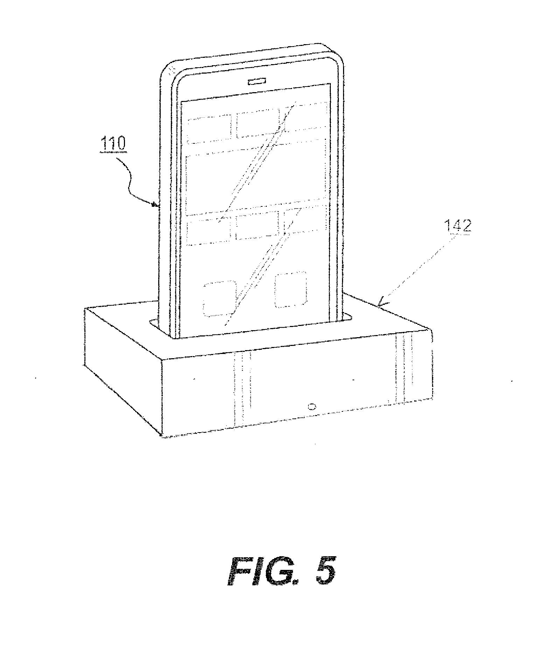

As shown in Figure **5****,** the cell phone **110** further comprises a wireless charging cradle **142** that is compatible with the cell phone **110,** whereby the cradle **142** can supply power to a rechargeable battery **144** within the cell phone **110** in Figure **1****.** The cell phone **110** may be charged wired. The wireless charging cradle **142** will supply power to the rechargeable battery **144.** The present invention can be used for convenience by any person, and is ideal for assisting elderly or disabled persons to utilize all of their phone applications with ease. The exact specifications may vary.

It will be understood that each of the elements described above, or two or more together, may also find a useful application in other types of constructions differing from the types described above.

While the invention has been illustrated and described as embodiments of a voice controlled cell phone, accordingly it is not limited to the details shown, since it will be understood that various omissions, modifications, substitutions and changes in the forms and details of the device illustrated and its operation can be made by those skilled in the art without departing in any way from the spirit of the present invention.

Without further analysis, the foregoing will so fully reveal the gist of the present invention that others can, by applying current knowledge, readily adapt it for various applications without omitting features that, from the standpoint of prior art, fairly constitute characteristics of the generic or specific aspects of this invention.

## Claims

1. A hand-free voice controlled cell phone which comprises:
a) an antenna;
b) a transceiver coupled to the antenna;
c) a processor coupled to the transceiver;
d) a microphone coupled to the processor;
e) a speaker coupled to the processor;
f) a touchscreen coupled to the processor for displaying;
g) a memory unit within the processor; and
h) means within the memory unit for converting an incoming voice message from the microphone made by a person using the cell phone into an inbound text message on the touchscreen for deaf person, whereby the processor can output different outbound text message of the deaf person to the transceiver and out of the antenna to allow another person using a remote second cell phone to receive the outbound text message.

2. The cell phone as recited in Claim 1, wherein the means for converting the incoming voice message into the inbound text message for the deaf person comprises a voice-to-text software.

3. The cell phone as recited in either claim 1 or 2, further comprising means within the memory unit for converting a text message received by the transceiver from the antenna into a voice message for blind person, whereby the processor can output the voice message into the speaker to allow the blind person using the cell phone to hear the voice message.

4. The cell phone as recited in Claim 3', wherein the means for converting the inbound text message into a voice message comprises a text-to-voice software.

5. The cell phone as recited in any preceding Claim, further comprising means within the memory unit for recognizing a voice of the person using the cell phone, whereby the processor will allow the person to perform various traditional voice command tasks on the cell phone such as music playing, video/audio recording, game playing, photographing and navigation.

6. The cell phone as recited in Claim 5, wherein the means for recognizing the voice of the person using the cell phone comprises a voice-recognition software.

7. The cell phone as recited in any preceding Claim, further comprising a wireless charging device that is compatible with the cell phone, whereby the device can supply power to a rechargeable battery within the cell phone [using inductive charging] .

8. The cell phone as recited in any preceding Claim, further comprising either one or more methods for charging the battery of the cell phone, whereby the cell phone may be placed on a wireless charging device and charged wirelessly using induction charging technology or the cell phone may be plugged in [wired] using a charger and charged.

9. The cell phone as recited in any preceding Claim, further comprising a camera or cameras, single or dual sim, memory card slot and a built in mobile hotspot.
